# FASCICULE DE BREVET EUROPEEN

(11) **EP 3 381 077 B1**
(45) Date de publication et mention de la délivrance du brevet: **17.02.2021**
(21) Numéro de dépôt: 16798800.5
(22) Date de dépôt: 23.11.2016
(51) Int. Cl.: H01M 8/04014, H01M 8/0267, H01M 8/04007, H01M 8/0432, H01M 8/04089, H01M 8/04746, H01M 8/065, H01M 8/1018

(54) **PILE À COMBUSTIBLE COMPRENANT DES PLAQUES DE RÉCHAUFFAGE ET INSTALLATION COMPRENANT UNE TELLE PILE**
BRENNSTOFFZELLE MIT HEIZPLATTEN UND ANLAGE MIT SOLCH EINER ZELLE
FUEL CELL COMPRISING HEATING PLATES AND FACILITY COMPRISING SUCH A CELL

(30) Priorité: 23.11.2015 FR 1561240
(43) Date de publication de la demande: 03.10.2018
(73) Titulaire: Compagnie Générale des Etablissements Michelin, 63000 Clermont-Ferrand (FR)
(72) Inventeur: BRAILLARD, Vincent, 63040 Clermont-Ferrand Cedex 09 (FR)
(74) Mandataire: Lavoix
(86) Numéro de dépôt international: PCT/EP2016/078589
(87) Numéro de publication internationale: WO 2017/089419

(56) Documents cités:
- FR-A1- 2 945 377
- US-A1- 2005 079 397
- US-A1- 2006 051 638

## Description

La présente invention concerne le domaine des piles à combustible, en particulier le domaine des piles à combustible aptes à être utilisées dans les véhicules automobiles.

Une pile à combustible permet la génération d'énergie électrique par une réaction électrochimique à partir d'un carburant, généralement de l'hydrogène, et d'un comburant, généralement de l'oxygène.

Une pile à combustible du type à membrane échangeuse de protons à électrolyte solide (PEMFC) comprend habituellement un empilement de cellules élémentaires, en forme de plaques, constituant des générateurs électrochimiques, chacune des cellules étant séparée des cellules adjacentes par des plaques bipolaires. Chaque cellule comprend un élément anodique et un élément cathodique, séparés par un électrolyte solide sous la forme d'une membrane échangeuse d'ions, réalisée par exemple en un matériau polymère perfluoré sulfuré. Selon une variante de réalisation habituelle, chaque plaque bipolaire assure d'un côté l'alimentation en carburant de la cellule adjacente à ce côté et de l'autre côté l'alimentation en comburant de la cellule adjacente à cet autre côté, les alimentations assurées par les plaques bipolaires se faisant en parallèle.

L'empilement comprend en outre des plaques collectrices de courant placées aux extrémités de l'empilement de cellules élémentaires et de plaques monopolaires, ainsi que des plaques terminales d'extrémité pour assurer l'assemblage.

Les plaques collectrices de courant sont généralement massives et en cuivre pour offrir une bonne conductivité électrique.

Lors d'un démarrage à froid de la pile à combustible, par exemple à des températures inférieures à moins dix degrés Celsius, le fonctionnement des cellules proches des plaques collectrices est pénalisé par l'inertie thermique de ces plaques collectrices. Il existe alors un risque de gel de l'eau produite lors du démarrage à froid, qui peut se traduire par une tension plus faible, voire nulle ou négative, induisant un risque d'échec du démarrage et des dégradations irréversibles de la pile.

Les documents US 2005/079397 et US 2006/051638 décrivent des installations qui comprennent des piles à combustible dans lesquelles des plaques de chauffage présentent des cavités pourvues d'hydrure de métal. Le but de la présente invention est notamment d'améliorer le démarrage à froid des piles à combustible.

Selon un mode de réalisation, il est proposé une installation selon la revendication 1 qui comprend ladite pile à combustible comprenant un empilement incluant un ensemble de générateurs électrochimiques superposés selon un axe d'empilement, et, axialement de part et d'autre dudit ensemble, des plaques de réchauffage présentant des cavités aptes à contenir un hydrure et des orifices d'accès à ces cavités et qui comprend en outre une source de gaz d'hydrogène sous pression reliée auxdits orifices desdites plaques de réchauffage et un dispositif de gestion de l'alimentation desdites cavités depuis cette source de gaz et de l'évacuation du gaz depuis ces cavités.

La source de gaz est reliée à ladite pile à combustible successivement par un détendeur haute pression et un détendeur basse pression.

Le dispositif de gestion comprend:
- une première électrovanne reliée d'une part à la jonction entre ledit détendeur haute pression et ledit détendeur basse pression et d'autre part auxdits orifices desdites cavités,
- une seconde électrovanne reliée d'une part à la jonction entre ledit détendeur basse pression et ledit ensemble de générateurs électrochimiques et d'autre part auxdits orifices desdites cavités, et
- une unité électronique de gestion des ouvertures/fermetures desdites électrovannes, apte à engendrer des cycles comprenant successivement l'ouverture de la première électrovanne, la fermeture de la première électrovanne, l'ouverture la seconde électrovanne et la fermeture de la seconde électrovanne.

L'unité électronique de gestion peut être apte à engendrer l'ouverture de la première électrovanne pendant une durée prédéterminée et à engendrer la fermeture de la seconde électrovanne pendant une durée prédéterminée.

L'installation peut comprendre un capteur de température relié à l'unité électronique de gestion, cette dernière étant apte à engendrer, lorsque la pile à combustible est mise en fonctionnement, au moins un cycle si le signal de température issu dudit capteur de température est inférieur à une valeur prédéterminée.

Lesdites plaques de réchauffage peuvent constituer des plaques collectrices de courant. Lesdites plaques de réchauffage peuvent être adjacentes à des plaques collectrices de courant situées axialement de part et d'autre dudit ensemble.

Lesdites plaques de réchauffage peuvent être insérées dans des plaques électriquement isolantes.

Il est également proposé un procédé de fonctionnement de l'installation, dans lequel, si la valeur d'un signal de température est inférieure à un seuil prédéterminé et qu'une demande de mise en route de la pile à combustible est effectuée, dans une première étape lesdites cavités sont alimentées en hydrogène sous une pression haute afin que l'hydrogène soit absorbé par l'hydrure, puis, dans une deuxième étape, les cavités sont placées sous une pression basse pour que l'hydrogène se désorbe.

La première étape et la deuxième étape peuvent être établies pendant des durées prédéterminées.

Une pile à combustible, une installation incluant cette pile et un fonctionnement d'une telle installation vont maintenant être décrits à titre d'exemples non limitatifs, illustrés par le dessin annexé dans lequel :
- la figure 1 représente une vue extérieure d'une pile à combustible ;
- la figure 2 représente une installation incluant la pile à combustible de la figure 1 ;
- la figure 3 représente un diagramme d'un mode de fonctionnement de l'installation de la figure 2 ; et
- la figure 4 représente un diagramme d'un autre mode de fonctionnement de l'installation de la figure 2.

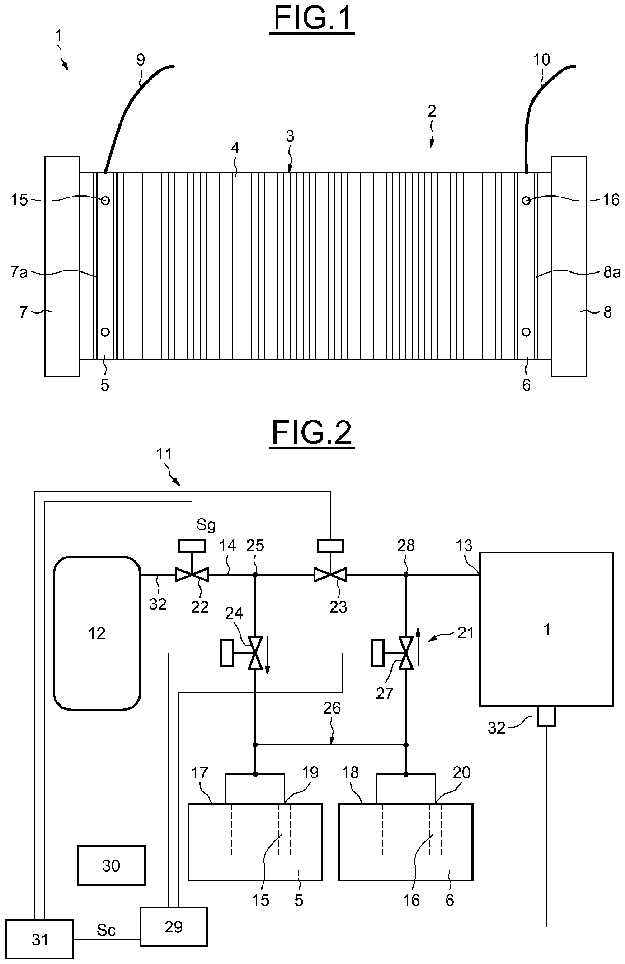

Comme illustré schématiquement sur la figure 1, une pile à combustible 1 comprend notamment un empilage 2 composé, selon un axe d'empilage, d'un ensemble 3 de générateurs électrochimiques 4 superposés, électriquement en série, et de plaques 5 et 6 collectrices de courant électrique, situées axialement de part et d'autre de l'ensemble 3 et accolées aux faces radiales d'extrémité de cet ensemble 3.

L'empilage 2 comprend en outre des plaques terminales d'assemblage 7 et 8, adjacentes aux plaques collectrices de courant 5 et 6 et isolées électriquement de ces dernières par des plaques isolantes 7a et 8a. L'empilage 2 est maintenu par des moyens de compression (non représentés) tels que par exemple des tirants.

Les plaques collectrices 5 et 6 sont reliées à des câbles électriques extérieurs 9 et 10 pour délivrer le courant électrique produit par l'ensemble 3 de générateurs électrochimiques 4.

De façon connue en soi, chaque générateur électrochimique 4 comprend des plaques formant une anode, un électrolyte et une cathode (non représentés) pour produire du courant électrique sous l'effet d'un carburant, généralement de l'hydrogène, et d'un comburant, généralement l'oxygène. Egalement de façon connue en soi, la pile à combustible 1 présente des canaux (non représentés) permettant la circulation du carburant et du comburant.

Comme illustré sur la figure 2, une installation 11 comprend la pile à combustible 1 et une source de gaz d'hydrogène 12 reliée à une entrée 13 de la pile à combustible 1 par un conduit d'alimentation 14 et apte à alimenter en hydrogène les générateurs électrochimiques 4.

Les plaques collectrices 5 et 6 présentent, respectivement, des trous borgnes 15 et 16 réalisés parallèlement aux faces principales de ces plaques collectrices 5 et 6, depuis l'un des champs 17 et 18 de ces plaques. Ces trous 15 et 16 constituent des cavités et leurs orifices d'entrée 19 et 20 dans ces champs 17 et 18 constituent des orifices d'accès à ces cavités. Avantageusement, chaque plaque collectrice peut présenter par exemple deux trous borgnes parallèles et espacés.

Les trous borgnes 15 et 16 sont au moins en partie remplis d'un hydrure en poudre ou en grains, apte, sous des conditions adaptées, à absorber l'hydrogène en produisant de la chaleur et à désorber l'hydrogène préalablement absorbé. Par exemple, cet hydrure peut être de composition de type LaNi5H7 ou NaAlH6.

L'installation 11 comprend un dispositif 21 de gestion de l'alimentation des trous borgnes 15 et 16 des plaques collectrices 5 et 6 depuis la source d'hydrogène 12 et de l'évacuation de l'hydrogène.

Le dispositif de gestion 21 comprend, sur le conduit d'alimentation 14 et entre la source d'hydrogène 12 et l'entrée 13 de la pile à combustible 1, un détendeur haute pression 22 puis une électrovanne basse pression 23 constituant un détendeur basse pression.

Le dispositif de gestion 21 comprend une première électrovanne 24 reliée d'une part à une jonction 25 du conduit 14 située entre le détendeur haute pression 22 et l'électrovanne basse pression 23 et d'autre part à un système 26 de conduits reliés aux orifices d'accès 19 et 20 et branchant en parallèles les trous borgnes 15 et 16 des plaques collectrices 5 et 6.

Le dispositif de gestion 21 comprend également une seconde électrovanne 27 reliée d'une part à une jonction 28 du conduit 14 située entre l'électrovanne basse pression 23 et l'entrée d'hydrogène 13 de la pile à combustible 1 et d'autre part au système de conduits 26.

Le dispositif de gestion 21 comprend en outre une unité électronique 29 soumise à un capteur de température 30, apte à capter par exemple la température ambiante. L'unité électronique 29 est apte à délivrer des signaux d'ouverture/fermeture des électrovannes 24 et 28.

L'unité électronique 29 est également soumise à un signal de commande Sc issu d'une unité électronique générale 31 de pilotage de l'installation 11. Cette unité électronique générale 31 est apte à délivrer un signal Sg d'ouverture/fermeture d'une électrovanne 22 montée sur le conduit d'alimentation 14 entre la source d'hydrogènel2 et le détendeur haute pression 22.

L'installation 11 peut fonctionner de la manière suivante.

Dans un état initial, la pression dans la source de pression 12 peut être d'environ 350 bars. Les électrovannes 24, 28 et 22 sont à l'état fermé F. La pile à combustible est par exemple à la température ambiante.

Sur une commande d'un opérateur ou d'une commande automatique, l'unité électronique générale 31 met en fonctionnement la pile à combustible 1. Plus particulièrement, l'unité électronique générale 31 envoie un signal d'ouverture à l'électrovanne 22 qui s'ouvre. La source 12 délivre de l'hydrogène à l'entrée 13 de la pile à combustible 1 par le conduit d'alimentation 14, via le détendeur haute pression 22 et l'électrovanne basse pression 23, l'oxygène étant délivré par des moyens non représentés.

La pile à combustible 1 est ainsi mise en fonctionnement. Sa température augmente. En fonctionnement dit normal, la température notamment de l'ensemble 2 des cellules électrochimiques 4 de la pile à combustible 1 peut être d'environ 75°C.

A titre d'exemple, la pression à la sortie du détendeur haute pression peut être d'environ 10 bars et la pression à la sortie de l'électrovanne basse pression peut être régulée à environ 2 bars absolus.

En même temps qu'elle envoie le signal d'ouverture à l'électrovanne 22, l'unité électronique générale 31 envoie le signal de commande Sc à l'unité électronique 29.

L'unité électronique 29 est programmée pour fonctionner de la manière suivante.

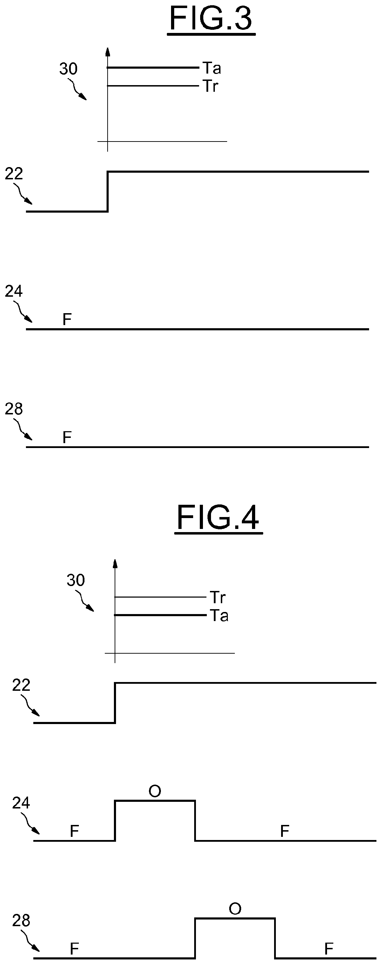

Comme illustré sur la figure 3, si la valeur du signal de température issu du capteur de la température ambiante 30 est supérieure à un seuil prédéterminé Tr, mesurée à l'instant du démarrage, l'unité électronique 29 maintient les électrovannes 24 et 28 à l'état fermé F. Par exemple, ce seuil Tr peut être fixé à moins dix degrés Celsius (-10°C).

La pile à combustible 1 poursuit son fonctionnement normalement.

Comme illustré sur la figure 4, selon une première étape, si par contre la valeur du signal de température issu du capteur de la température ambiante 30 est inférieure audit seuil prédéterminé Tr, l'unité électronique 29 envoie un signal d'ouverture à l'électrovanne 24 qui passe immédiatement à l'état ouvert O, tout en maintenant l'électrovanne 28 à l'état fermé F.

Ce faisant, de l'hydrogène, à la pression haute Ph de sortie du détendeur haute pression 22, est injecté dans les trous 15 et 16 des plaques collectrices 5 et 6 et la pression dans les trous 15 et 16 va s'établir à la pression haute Ph. L'hydrogène injecté est absorbé par les hydrures contenus dans ces trous 15 et 16. Cette absorption étant exothermique, les plaques collectrices 5 et 6 se trouvent réchauffées rapidement et la chaleur produite est transférée de proche en proche aux plaques formant les cellules 4 de l'ensemble 2.

Ce réchauffage au démarrage de la pile à combustible 1 permet une mise en fonctionnement immédiate et sans dommage de cette dernière.

Au bout d'un délai prédéterminé programmé, selon une deuxième étape, l'unité électronique 29 envoie un signal de fermeture à l'électrovanne 24 qui passe à l'état fermé F et envoie un signal d'ouverture à l'électrovanne 28 qui passe à l'état ouvert O.

Ce faisant, les trous 15 et 16 étant alors mis à la pression basse Pb de sortie de l'électrovanne basse pression 23, l'hydrogène préalablement absorbé est désorbé des hydrures contenus dans les trous 15 et 16 et est délivré dans le conduit d'alimentation 14, à l'entrée 13 de la pile à combustible 1.

Au bout d'un délai prédéterminé programmé, l'unité électronique 29 envoie un signal de fermeture à l'électrovanne 28 qui passe à l'état fermé F.

La pile à combustible 1 poursuit son fonctionnement normalement.

Le fonctionnement de l'installation 11 qui vient d'être décrit peut être répété à chaque fois que cette installation est mise en marche.

Selon une variante de réalisation, l'unité électronique 29 peut en outre être soumise à un signal issu d'un capteur de température sensible 32 à la température de la pile à combustible 1.

L'unité électronique 29 est programmée pour que, si la valeur du signal délivré par ce capteur de température 32 est supérieure à un seuil Tr1, le fonctionnement de l'installation 11 correspond à celui décrit en référence à la figure 3, quel que soit le signal issu du détecteur de température 30. Par exemple, ce seuil Tr1 peut être fixé à moins dix degrés Celsius (-10°C). Les seuils Tr et Tr1 peuvent cependant être fixés à des valeurs différentes.

Si par contre la valeur du signal délivré par ce capteur de température 32 est inférieure au seuil Tr1, et que la valeur du signal de température issu du capteur de la température ambiante 30 est inférieure audit seuil prédéterminé Tr, alors le fonctionnement de l'installation correspond à celui décrit en référence à la figure 4.

Selon une autre variante de réalisation, l'unité électronique 29 pourrait n'être soumise qu'au capteur de température 32.

Selon une variante de réalisation, les plaques collectrices 5 et 6 peuvent être insérées dans des évidements de plaques en une matière électriquement isolante, présentant des portions s'étendant entre les plaques collectrices 5 et 6 et les plaques terminales d'assemblage 7 et 8.

Selon une variante de réalisation, les cavités précitées recevant les hydrures pourraient être prévues dans des plaques complémentaires adjacentes ou accolées à des plaques collectrices de courant 5 et 6 ne présentant pas les trous 15 et 16, ces plaques complémentaires étant placées entre ces plaques collectrices et les plaques isolantes 7a et 8a ou entre ces plaques collectrices et l'ensemble 3 de générateurs électrochimiques 4.

Selon une variante de réalisation, l'hydrogène injecté dans les cavités 15 et 16 pourrait provenir d'une source auxiliaire adaptée autre que la source 12 et l'hydrogène désorbé via l'électrovanne 27 pourrait ne pas être injecté à l'entrée 13 de la pile à combustible 1 mais pourrait être évacué pour être recyclé vers un autre moyen adapté.

## Revendications

1. Installation comprenant une pile à combustible (1) comprenant un empilement incluant un ensemble (2) de générateurs électrochimiques superposés selon un axe d'empilement, et, axialement de part et d'autre dudit ensemble, des plaques de réchauffage (5, 6) présentant des cavités (15, 16) et des orifices (19, 20) d'accès à ces cavités et comprenant en outre une source (12) de gaz d'hydrogène sous pression reliée auxdits orifices desdits plaques de réchauffage et un dispositif (21) de gestion de l'alimentation desdites cavités (15, 16) depuis cette source de gaz (12) et de l'évacuation du gaz depuis ces cavités (15, 16), lesdites cavités (15, 16) étant des trous borgnes remplis au moins en partie d'un hydrure apte à absorber l'hydrogène en produisant de la chaleur et à désorber l'hydrogène préalablement absorbé dans laquelle la source de gaz (12) est reliée à ladite pile à combustible (1) par un conduit d'alimentation (14) comprenant successivement un détendeur haute pression (22) et un détendeur basse pression (23) ; et dans laquelle le dispositif de gestion (21) comprend :
- une première électrovanne (24) reliée d'une part à une jonction (25) du conduit d'alimentation (14) entre ledit détendeur haute pression (22) et ledit détendeur basse pression (23) et d'autre part à un système (26) de conduits reliés auxdits orifices d'accès (19, 20) et branchant en parallèles lesdites cavités (15, 16),
- une seconde électrovanne (27) reliée d'une part à une jonction (28) du conduit d'alimentation (14) entre ledit détendeur basse pression et ledit ensemble de générateurs électrochimiques et d'autre part au système (26) de conduits ; et
- une unité électronique de gestion (29) des ouvertures/fermetures desdites électrovannes, apte à engendrer des cycles comprenant successivement l'ouverture de la première électrovanne (24), la fermeture de la première électrovanne (24), l'ouverture de la seconde électrovanne (27) et la fermeture de la seconde électrovanne (27).

2. Installation selon la revendication 1, dans laquelle l'unité électronique de gestion est apte à engendrer l'ouverture de la première électrovanne (24) pendant une durée prédéterminée et à engendrer la fermeture de la seconde électrovanne (27) pendant une durée prédéterminée.

3. Installation selon l'une des revendications 1 et 2, comprenant un capteur de température (30) relié à l'unité électronique de gestion, cette dernière étant apte à engendrer, lorsque la pile à combustible est mise en fonctionnement, au moins un cycle si le signal de température issu dudit capteur de température est inférieur à une valeur prédéterminée (Tr, Tr1).

4. Installation selon l'une quelconque des revendications précédentes, dans laquelle lesdites plaques de réchauffage (5, 6) constituent des plaques collectrices de courant.

5. Installation selon l'une quelconque des revendications précédentes, dans laquelle lesdites plaques de réchauffage (5, 6) sont adjacentes à des plaques collectrices de courant situées axialement de part et d'autre dudit ensemble (2).

6. Installation selon l'une quelconque des revendications précédentes, dans laquelle lesdites plaques de réchauffage (5, 6) sont insérées dans des plaques électriquement isolantes (7a, 8a).

7. Procédé de fonctionnement d'une installation selon l'une quelconque des revendications précédentes dans lequel, si la valeur d'un signal de température est inférieure à un seuil, dans une première étape lesdites cavités (15, 16) sont alimentées en hydrogène sous une pression haute pour que l'hydrogène soit absorbé par l'hydrure, puis, dans une deuxième étape, les cavités sont placées sous une pression basse pour que l'hydrogène se désorbe.

8. Procédé selon la revendication 7, dans lequel la première étape et la deuxième étape sont établies pendant des durées prédéterminées.

## Patentansprüche

1. Anlage, eine Brennstoffzelle (1) umfassend, die einen Stapel, der eine Anordnung (2) von gemäß einer Stapelachse übereinanderliegenden elektrochemischen Generatoren enthält, und axial beidseitig der Anordnung Heizplatten (5, 6) umfasst, die Hohlräume (15, 16) und Öffnungen (19, 20) für den Zugang zu diesen Hohlräumen aufweisen, und außerdem eine Quelle (12) für unter Druck stehendes Wasserstoffgas, die mit den Öffnungen der Heizplatten verbunden ist, und eine Vorrichtung (21) zum Steuern der Versorgung der Hohlräume (15, 16) aus dieser Gasquelle (12) und zum Auslassen von Gas aus diesen Hohlräumen (15, 16) umfassend, wobei die Hohlräume (15, 16) Sacklöcher sind, die mindestens teilweise mit Hydrid gefüllt sind, das geeignet ist, den Wasserstoff zu absorbieren, wobei Wärme erzeugt wird, und den zuvor absorbierten Wasserstoff zu desorbieren, wobei die Gasquelle (12) mit der Brennstoffzelle (1) über einen Versorgungskanal (14) verbunden ist, der aufeinanderfolgend ein Hochdruckexpansionsventil (22) und ein Niederdruckexpansionsventil (23) umfasst; und wobei die Steuervorrichtung (21) umfasst:
- ein erstes Elektroventil (24), das einerseits an einen Verbindungpunkt (25) des Versorgungskanals (14) zwischen dem Hochdruckexpansionsventil (22) und dem Niederdruckexpansionsventil (23) und andererseits an ein System (26) von Kanälen, die mit den Zugangsöffnungen (19, 20) verbunden sind und parallel zu den Hohlräumen (15, 16) abzweigen, angeschlossen ist,
- ein zweites Elektroventil (27), das einerseits mit einem Verbindungspunkt (28) des Versorgungskanals (14) zwischen dem Niederdruckexpansionsventil und der Anordnung von elektrochemischen Generatoren und andererseits mit dem System (26) von Kanälen verbunden ist; und
- eine elektronische Steuereinheit (29) zum Steuern des Öffnens/Schließens der Elektroventile, die geeignet ist, Zyklen zu erzeugen, die aufeinanderfolgend das Öffnen des ersten Elektroventils (24), das Schließen des ersten Elektroventils (24), das Öffnen des zweiten Elektroventils (27) und das Schließen des zweiten Elektroventils (27) umfassen.

2. Anlage nach Anspruch 1, bei der die elektronische Steuereinheit geeignet ist, das Öffnen des ersten Elektroventils (24) während einer vorbestimmten Dauer zu erzeugen und das Schließen des zweiten Elektroventils (4 27) während einer vorbestimmten Dauer zu erzeugen.

3. Anlage nach einem der Ansprüche 1 und 2, einen Temperatursensor (30) umfassend, der mit der elektronischen Steuereinheit verbunden ist, wobei Letztere geeignet ist, wenn die Brennstoffzelle in Betrieb geht, mindestens einen Zyklus zu erzeugen, falls das von dem Temperatursensor ausgegebene Temperatursignal kleiner als ein vorbestimmter Wert (Tr, Tr1) ist.

4. Anlage nach einem beliebigen der vorhergehenden Ansprüche, bei der die Heizplatten (5, 6) Stromsammelplatten darstellen.

5. Anlage nach einem beliebigen der vorhergehenden Ansprüche, bei der die Heizplatten (5, 6) benachbart zu den Stromsammelplatten angeordnet sind, die axial beidseitig der Anordnung (2) liegen.

6. Anlage nach einem beliebigen der vorhergehenden Ansprüche, bei der die Heizplatten (5, 6) in elektrisch isolierende Platten (7a, 8a) eingefügt sind.

7. Verfahren zum Betreiben einer Anlage nach einem beliebigen der vorhergehenden Ansprüche, bei dem, wenn der Wert eines Temperatursignals kleiner als eine Schwelle ist, in einem ersten Schritt die Hohlräume (15, 16) mit unter einem Hochdruck stehenden Wasserstoff versorgt werden, damit der Wasserstoff von dem Hydrid absorbiert wird, dann in einem zweiten Schritt die Hohlräume unter einen Niederdruck gelegt werden, damit der Wasserstoff desorbiert wird.

8. Verfahren nach Anspruch 7, bei dem der erste Schritt und der zweite Schritt während vorbestimmter Zeitspannen durchgeführt werden.

## Claims

1. Facility including a fuel cell (1) comprising a stack including a set (2) of electrochemical generators superimposed along a stacking axis, and, axially on either side of said set, heating plates (5, 6) having cavities (15, 16) and access orifices (19, 20) for accessing these cavities, and including a source (12) of hydrogen gas under pressure linked to said orifices of said heating plates and a device (21) for managing the supply to said cavities (15, 16) from this gas source and the evacuation of the gas from these cavities (15, 16), said cavities being blind holes at least partially filed with a hydride suitable to absorb the hydrogen while producing heat and to desorb the previously absorbed hydrogen, where the gas source (12) is linked to said fuel cell (1) by a supply conduit (14) comprising successively a high-pressure expansion valve (22) and a low-pressure expansion valve (23) and where the management device (21) comprises:
- a first solenoid valve (24) linked firstly to a junction (25) of the supply conduit (14) between said high-pressure expansion valve (22) and said low-pressure expansion valve (23) and secondly to a system of conduits (26) linked to said access orifices (19, 20) and connecting in parallel said cavities (15, 16),
- a second solenoid valve (27) linked firstly to a junction (28) of the supply conduit (14) between said low-pressure expansion valve and said set of electrochemical generators and secondly to said system of conduits (26); and
- an electronic unit (29) for managing the opening/closure of said solenoid valves, able to bring about cycles successively comprising the opening of the first solenoid valve (24), the closure of the first solenoid valve (24), the opening of the second solenoid valve (27) and the closure of the second solenoid valve (27).

2. Facility according to claim 1, wherein the electronic management unit is able to bring about the opening of the first solenoid valve (24) for a predetermined duration and to bring about the closure of the second solenoid valve (27) for a predetermined duration.

3. Facility according to either one of claims 1 and 2, comprising a temperature sensor (30) linked to the electronic management unit, the latter being able to bring about, when the fuel cell is put into operation, at least one cycle if the temperature signal originating from said temperature sensor is lower than a predetermined value (Tr, Tr1).

4. Facility according any one of the preceding claims, wherein said heating plates (5, 6) form current collector plates.

5. Facility according to any one of the preceding claims, wherein said heating plates (5,6) are adjacent to current collector plates that are situated axially on either side of said set (2).

6. Facility according to any one of the preceding claims, wherein said heating plates (5, 6) are inserted into electrically insulating plates (7a, 8a).

7. Method for operating a facility according to any one of the preceding claims, wherein, if the value of a temperature signal is lower than a threshold, in a first step, said cavities (15, 16) are supplied with highly pressurized hydrogen, such that the hydrogen is absorbed by the hydride, and then, in a second step, the cavities are put under a low pressure so that the hydrogen desorbs.

8. Method according to claim 7, wherein the first step and the second step are implemented for predetermined durations.
